# EUROPEAN PATENT APPLICATION

(11) **EP 3 872 820 A1**
(43) Date of publication of application: **01.09.2021**
(21) Application number: 18937957.1
(22) Date of filing: 27.11.2018
(51) Int. Cl.: G21F 9/28, G21F 9/30

(54) **DEVICE FOR DEACTIVATING RADIOACTIVE ELEMENTS**

(30) Priority: 23.10.2018 RU 2018137182
(71) Applicant: Joint Stock Company "Rosenergoatom", Moscow 109507 (RU); Joint Stock Company "Science and Innovations", Moscow 119180 (RU); Science and Innovations - Nuclear Industry Scientific Development, Private Enterprise, Moscow, 119017 (RU)
(72) Inventor: SHEVCHENKO, Boris Nikolaevich, Voronezhskaya obl. 396072 (RU); NEUPOKOEV, Mikhail Alekseevich, Voronezhskaya obl., 396072 (RU)
(74) Representative: Friese Goeden Patentanwälte PartGmbB
(86) International application number: PCT/RU2018/000769
(87) International publication number: WO 2020/085939

(57) **Abstract**

The invention relates to devices for eliminating radioactive contamination of radioactive waste, namely, the radioactive waste surface decontamination facility. The object of the claimed invention is to extend the facility capabilities and reduce harmful factors. The technical result achieved by the current invention is to reduce the amount of waste, as well as to minimize harmful factors and dose loads. The specified technical result is achieved due to the fact that the radioactive elements decontamination device comprises the loading-unloading manipulator, the process chamber with a lid with the round turn-around table located inside, the waste disposal container and the exhaust ventilation unit, while the process chamber is equipped with the remote handling unit mounted on its outer part, the device for a dust-free abrasive blast cleaning, waterjet cutting unit, connected through a leak-tight installed hoses in the process chamber walls, the abrasive and slurry collection unit and at least one device for radiation control, located inside the process chamber, the solid and liquid waste separation unit and discharge liquid waste, wherein the process chamber is equipped with chemical-radiation-shock proof sound-absorbing coating, and the remote control unit connected with the device for a dust-free abrasive blast cleaning, waterjet cutting unit, abrasive and slurry collection device, exhaust ventilation unit, the process chamber lid, the radiation control unit and the solid and liquid waste separation unit. Preferably, the process chamber may be equipped with light openings located in its side walls, and the floor of the process chamber is made with a slope of 0.6° to ensure the flow of spent hydroabrasive mixtures. The process chamber may be equipped with auxiliary leak-tight sealed swing doors and equipped with the intake exhaust ventilation. The abrasive and slurry collection unit preferably comprises a control panel, a vacuum dust collector, a connected with it container for collecting spent fine waste fractions, a mobile cyclone separator, a container connected with it for collecting spent large waste fractions, comprising a fill level monitoring sensor, a leak monitoring sensor installed on a mobile cyclone separator. The exhaust ventilation unit may be equipped with a leak-tight mounted flange valve and a discharge sensor. The solid and liquid waste separation unit preferably comprises a precipitator tank with an overflow tube and sensors of the lower and upper levels, leak-tightly connected by means of an adapter with a container for collecting waste, a tilter for liquid waste draining, a hydrocyclone, at least one pump and a pipeline system connecting them.

## Description

The invention relates to devices for eliminating radioactive contamination of radioactive waste, namely, the radioactive waste surface decontamination facility.

In addition, the invention can be used for the metals surface cleaning.

When cleaning radioactively contaminated surfaces of nuclear reactor parts, it is necessary to avoid the spread of the radioactive particles and aerosols into the surrounding environment and limit the amount of radioactive waste produced.

The device for decontamination of radioactively contaminated surfaces (RF application No. 92016556), comprising a dust-proof chamber, inside which there is a mobile manipulator with a jet head for mechanical jet treatment of the surface area to be decontaminated with a dry agent, as well as the device for exhaust the resulting dust and mixture, is already known.

However, the conventional device does not provide effective decontamination of the radioactive waste. Moreover, the resulting dust is not completely absorbed by the exhaust hood and partially settles on available surfaces.

The device for processing solid radioactive and toxic waste (RF patent No. 2124771), comprising a processing chamber, a loading-unloading manipulator, a round turn-around table, a sealing lid, a waste disposal container and an exhaust system, is also known. Devices for decontamination of radioactive waste are located inside the process chamber. However, the conventional device is intended only for cement solidification.

The object of the claimed invention is to extend the facility capabilities and reduce harmful factors.

The technical result achieved by the current invention is to reduce the amount of waste, as well as to minimize harmful factors and dose loads.

The specified technical result is achieved due to the fact that the radioactive elements decontamination device comprises the loading-unloading manipulator, the process chamber with a lid with the round turn-around table located inside, the waste disposal container and the exhaust ventilation unit, while the process chamber is equipped with the remote handling unit mounted on its outer part, the device for a dust-free abrasive blast cleaning, waterjet cutting unit, connected through a leak-tight installed hoses in the process chamber walls, the abrasive and slurry collection unit and at least one device for radiation control, located inside the process chamber, the solid and liquid waste separation unit and discharge liquid waste, wherein the process chamber is equipped with chemical-radiation-shock proof sound-absorbing coating, and the remote control unit connected with the device for a dust-free abrasive blast cleaning, waterjet cutting unit, abrasive and slurry collection device, exhaust ventilation unit, the process chamber lid, the radiation control unit and the solid and liquid waste separation unit.

Preferably, the process chamber may be equipped with light openings located in its side walls, and the floor of the process chamber is made with a slope of 0.6° to ensure the flow of spent hydroabrasive mixtures.

The process chamber may be equipped with auxiliary leak-tight sealed swing doors and equipped with the intake exhaust ventilation.

The abrasive and slurry collection unit preferably comprises a control panel, a vacuum dust collector, a connected with it container for collecting spent fine waste fractions, a mobile cyclone separator, a container connected with it for collecting spent large waste fractions, comprising a fill level monitoring sensor, a leak monitoring sensor installed on a mobile cyclone separator.

The exhaust ventilation unit may be equipped with a leak-tight mounted flange valve and a discharge sensor.

The solid and liquid waste separation unit preferably comprises a precipitator tank with an overflow tube and sensors of the lower and upper levels, leak-tightly connected by means of an adapter with a container for collecting waste, a tilter for liquid waste draining, a hydrocyclone, at least one pump and a pipeline system connecting them.

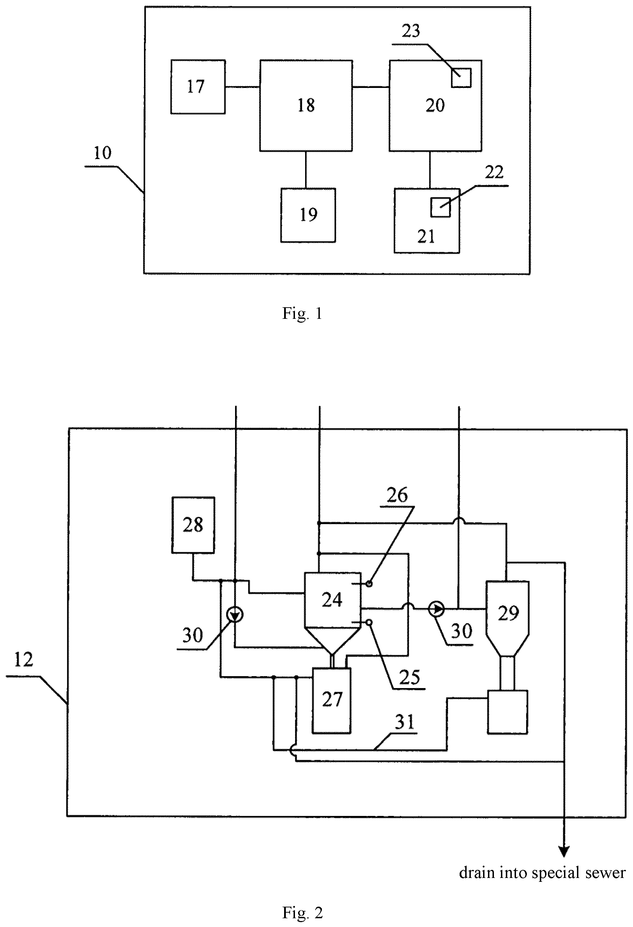

The substance of the radioactive elements decontamination device is illustrated by the drawings shown on Fig. 1-3.

Figure 1 shows the device general arrangement drawing, Figure 2 shows the engineering flow diagram, Figure 3 shows the top view of the device, Figure 4 presents the right view, and Figure 5 shows the rear view.

The radioactive elements decontamination device comprises the loading-unloading manipulator 1, the process chamber 2 with a lid 3, located inside it turn-around table 4 for placing the radioactive elements, the container 5 for collecting waste and the exhaust ventilation unit 6. The lid 3 located in the upper part of the process chamber is rolled back using two electric drives and is used for loading radioactive elements using the loading-unloading manipulator 1.

The process chamber 2 is equipped with a remote control unit 7 installed on its external part.

For decontamination of the radioactive elements surface, the device for the dust-free abrasive blast 8 and a waterjet cutting unit 9 installed inside the process chamber 2 are used.

For cleaning the process chamber 2, on the floors of which up to 90% of solid radioactive waste of used abrasive and slurry is deposited, as well as for cleaning local spill traces when replacing containers filled with solid radioactive waste 5 for waste collection, the device for collecting abrasive and slurry 10 is designed. The collecting abrasive and sludge device 10 is connected to the process chamber 2 by means of the leak-tight installed hoses in the walls of the process chamber 2.

The exhaust ventilation unit 6, which is the process chamber 2 equipped with, discharges air into the special ventilation system.

Also, the process chamber 2 is equipped with at least one radiation monitoring device 11, which is positioned inside the process chamber 2.

Also, the radioactive elements decontamination device comprises the solid and liquid waste separation unit 12.

The process chamber 2 is made in the form of a metal box with a metal frame, equipped with light openings 13 located in its side walls. Light openings 13 are made with armour-coated glass glazing. A noise-absorbing coating is laid on the floor and side walls to a height of 1200 mm. The coating also possesses the shock-resistant, radiation - and chemical-resistant features. To enter the process communications (pipes, hoses, wiring) in the walls of the process chamber 2 the technological openings are provided, the floor of the process chamber 2 is made with a slope of 0.6° to ensure exhaust flow hydroabrasive mixtures through the liquid waste drain 14. In addition, the process chamber 2 is equipped with auxiliary leak-tight sealed swing doors 15 and intake exhaust ventilation 16.

The remote control unit 7 is connected to the dust-free abrasive blast device 8, the waterjet cutting device 9, the device 10 for collecting abrasive and slurry, the exhaust ventilation unit 9, the lid 3 of the process chamber, the radiation monitoring device 11 and the solid and liquid waste separation unit 12.

The remote control unit 7 provides switching on and switching of power electric circuits communications, mode selection and device control, including the dust-free abrasive blast device 8, the waterjet cutting device 9, the device 10 for collecting abrasive and slurry, the lid actuators 3 of the process chamber 2, the exhaust ventilation unit 6, the solid and liquid waste separation unit 12, the radiation monitoring device 11, swing doors 15 intake exhaust ventilation 16. The algorithm of operation of the remote control unit 7 provides for blocking the activation of the engineering tool when the lid 3 is moved, the swing doors 15 are open, the supply of the intake exhaust ventilation 16 is disrupted, and the exhaust ventilation unit 6 is disrupted.

The device 10 for collecting abrasive and slurry comprises a control panel 17, a vacuum dust collector 18, the connected to it container 19 for collecting spent fine waste fractions, a mobile cyclone separator 20, a container 21 connected with it for collecting spent large waste fractions, the presence of which is signaled by a photo sensor mounted on the adapter. The container 21 connected with it for collecting spent large waste fractions comprises the fill level monitoring sensor 22, the leak monitoring sensor 23 installed on a mobile cyclone separator 20.

The exhaust ventilation unit 6 is equipped with a leak-tightly installed flanged valve and a discharge sensor (not shown in Fig.).

The solid and liquid waste separation unit 12 preferably comprises a precipitator tank 24 with an overflow tube and sensors 25 and 26 of the lower and upper levels respectively. The precipitator tank 24 is leak-tightly connected with a container for collecting waste 27, the presence of which is signaled by the photo sensor mounted on the adapter. The solid and liquid waste separation unit 12 also comprises a tilter 28 for liquid waste draining, a hydrocyclone 29, at least one pump 30 and a pipeline system 31. The precipitator tank 24 is designed to separate a large spent fraction of abrasive (solid radioactive waste) from the liquid phase (liquid radioactive waste).

The pump 30 is designed to supply abrasive to the precipitator tank 24. The filling level of the precipitator tank 24 is monitored using a lower-level sensor 25 and two upper-level sensors 26. The tilter 28 is designed to drain the liquid phase residues from the container for collecting waste 27.

The radioactive elements decontamination device is intended for processing procedures implementation of dust-free abrasive blast and waterjet treatment associated with the release of radioactive dust and decontaminating solutions.

The radioactive elements decontamination device is functioning as follows.

For decontamination of the radioactive elements surface, hydrodynamic decontamination of the equipment and pipelines surface that are being decommissioned, solid radioactive waste of various surfaces and configurations, waterjet cutting of various materials, a dust-free abrasive blast device 8 is used, as well as a waterjet cutting device 9.

Prior the work start, the process chamber 2 is loaded with the the loading-unloading manipulator 1 intended for processing the workpiece through the pmoved lid 3. The movement of the lid 3 is controlled by the remote control unit 7.

The radioactive elements surface treatment is implemented on the turn-around table 3. The operation of the dust-free abrasive blast device 8 is implemented by supplying compressed air. Thus, using the remote control unit 7, the abrasive and slurry collection device 10 and the exhaust ventilation unit 6 are switched on.

The operation of the waterjet cutting device 9 is carried out by supplying water under pressure.

The spent water jet is supplied to the precipitator tank 24, where a large fraction of the abrasive is deposited in the waste collection container 27.

When the upper working level is reached in the precipitator tank 24, the upper level sensors 26 are triggered, the pump 30 is turned on, and the liquid (clarified part) is supplied to the hydrocyclone 29 for the second stage of cleaning. In hydrocyclone 29, a fine fraction of the abrasive is deposited, and liquid radioactive waste is discharged into a special drainage system. There is a sampling nozzle on the drainage pipe for monitoring the abrasive mass content.

When the lower level is reached in the precipitator tank 24, the lower level sensor 25 is activated and the pump 30 is switched off.

The waste collection container 27 is moved to the tilter 28. The waste collection container 27 is installed into the tilting basket 28 with the load handling device. By turning the tilting basket 28, the liquid phase is drained into the funnel. When the rotation angle of the basket reaches 135°, the sensor is triggered (not shown in the figure) and gives a signal to turn off the swing drive. After draining the liquid phase and returning the basket to its original state, a standard lid is mounted on the waste collection container 27.

Container 27 for collecting solid radioactive waste is sent to a temporary storage site.

After the process of decontamination of the radioactive element surface is completed, the necessary measurements are made using the radiation monitoring device 11. Based on the results obtained, solid radioactive waste is re-processed or sent to the warehouse.

## Claims

1. A device for deactivating radioactive elements comprising the loading-unloading manipulator, the process chamber with a lid with the round turn-around table located inside, the waste disposal container and the exhaust ventilation unit, **characterizing in that** the process chamber is equipped with the remote handling unit mounted on its outer part, the device for a dust-free abrasive blast cleaning, waterjet cutting unit, connected through a leak-tight installed hoses in the process chamber walls, the abrasive and slurry collection unit and at least one device for radiation control, located inside the process chamber, the solid and liquid waste separation unit and discharge liquid waste, wherein the process chamber is equipped with chemical-radiation-shock proof sound-absorbing coating, and the remote control unit connected with the device for a dust-free abrasive blast cleaning, waterjet cutting unit, abrasive and slurry collection device, exhaust ventilation system, the process chamber lid, the radiation control unit and the solid and liquid waste separation unit.

2. The device for deactivating radioactive elements according to the claim 1, **characterized in that** the process chamber is equipped with light openings located in its side walls.

3. The device for deactivating radioactive elements according to the claim 1, **characterized in that** the process chamber is made with a slope of 0.6° to ensure the drain of the spent hydroabrasive mixtures.

4. The device for deactivating radioactive elements according to the claim 1, **characterizing in that** the process chamber is equipped with additional leak-tightly sealed swing doors.

5. The device for deactivating radioactive elements according to the claim 1, **characterizing in that** the process chamber is equipped with the intake ventilation.

6. The device for deactivating radioactive elements according to the claim 1, **characterizing in that** the abrasive and slurry collection unit comprises a control panel, a vacuum dust collector, a connected with it container for collecting spent fine waste fractions, a mobile cyclone separator, a container connected with it for collecting spent large waste fractions, comprising a fill level monitoring sensor, a leak monitoring sensor installed on a mobile cyclone separator.

7. The device for deactivating radioactive elements according to the claim 1, **characterizing in that** the exhaust ventilation unit is equipped with a leak-tightly installed flanged valve and a discharge sensor.

8. The device for deactivating radioactive elements according to the claim 1, **characterizing in that** solid and liquid waste separation unit comprises a precipitator tank with an overflow tube and sensors of the lower and upper levels, leak-tightly connected by means of an adapter with a container for collecting waste, a tilter for liquid waste draining, a hydrocyclone, at least one pump and a pipeline system connecting them.
